# EUROPÄISCHE PATENTANMELDUNG

(11) **EP 1 410 752 A1**
(43) Veröffentlichungstag der Anmeldung: **21.04.2004**
(21) Anmeldenummer: 03090317.3
(22) Anmeldetag: 25.09.2003
(51) Int. Cl.: A47L 15/24, B65G 65/48

(54) **Vorrichtung zum Leeren und Reinigen von Tabletts in Schnellgaststätten**

(30) Priorität: 26.09.2002 DE 10245166
(71) Anmelder: Wincor Nixdorf International GmbH, 33094 Paderborn (DE)
(72) Erfinder: Strauss, Hans, 98704 Langewiesen (DE); Löning, Johann, 26122 Oldenburg (DE); Hecht, Siegmar, Dr., 98693 Ilmenau (DE)
(74) Vertreter: Seewald, Jürgen, Dipl.-Ing.

(57) **Zusammenfassung**

Die vorliegende Erfindung betrifft eine Vorrichtung zum Leeren und Reinigen von Tabletts in Schnellgaststätten, mit einem Liftförderer (1), in den die gebrauchten Tabletts (14) übereinander einlegbar und in eine oberste Position (15) verfahrbar sind, einem der obersten Positionen (15) der Tabletts (14) zugeordneten Entleerungsförderer (4), der dem Liftförderer (1) das jeweils in oberster Position (15) befindliche Tablett (14) entnimmt, in Schräglage über einen Schütttrichter (2) fördert, so dass der Tablettinhalt unter Schwerkraftwirkung in den Schütttrichter (2) fällt, und anschließend auf einen Förderer (6) ablegt, welcher die Tabletts (14) in eine Reinigungseinrichtung (5) fördert.

## Beschreibung

In Schnellgaststätten werden Speisen und Getränke in Leichtverpackungen wie Pappschalen und Kunststoffbechern gereicht. Beim Verlassen des Restaurants stellen die Gäste die Tabletts mit den leeren oder nur zum Teil geleerten Leichtverpackungen ab. Diese werden dann vom Personal manuell geleert und gereinigt und wieder in den Umlauf gegeben. Da derartige Gaststätten einen grossen Gästedurchlauf haben, fallen sehr viele Tabletts zur Leerung und Reinigung an, so dass diese Tätigkeit sehr zeitaufwendig ist und in aller Regel eine Hilfskraft nur dafür abzustellen ist.

Aus WO 96 27 320 A1, DE 37 17 011 A1 und DE 24 43 651 C2 sind Entleerungsförderer für Tabletts beschrieben, wobei in der WO 96 27 320 A1 eine Abfallentfernung durch Schrägstellung des Tabletts offenbart ist.

Aufgabe der vorliegenden Erfindung ist es, eine weitere Vorrichtung zur Verfügung zu stellen, die den Vorgang des Leerens und Reinigens von Tabletts in Schnellgaststätten automatisiert.

Diese Aufgabe wird mit einer Vorrichtung gelöst, die die Merkmale des Anspruchs 1 aufweist.

Die erfindungsgemässe Vorrichtung besteht also im wesentlichen aus den Komponenten Liftförderer, Entleerungsförderer, Schütttrichter, Förderer in eine Reinigungseinrichtung und der Reinigungseinrichtung selbst. Bei dem Liftförderer wird das von Schnellgaststätten schon bekannte Prinzip der Ablage von gebrauchten Tabletts in einem Einschiebregal genutzt, in dem die Tabletts mit Abstand übereinander angeordnet sind und mit zwei sich gegenüberliegenden Randbereichen auf den Seitenwänden des Einschiebregals vorgesehenen Halteleisten aufliegen. Der Liftförderer fördert die abgestellten Tabletts nacheinander in eine obere, z. B. durch eine Lichtschranke exakt bestimmbare Position, in der sie von einem Entleerungsförderer dem Liftförderer entnommen und auf einen Förderer abgelegt werden, der sie in einer Reinigungseinrichtung transportiert. Die Förderstrecke des Entleerungsförderers zwischen dem Liftförderer und dem Förderer in die Reinigungseinrichtung wird zum Entleeren der Tabletts genutzt, in dem diese auf diesem Förderweg in eine Schräglage gebracht werden, so dass der Tablettinhalt unter der Einwirkung der Schwerkraft in den Schütttrichter fallen kann.

In vorteilhafter Ausgestaltung der Erfindung besteht der Liftförderer aus jeweils zwei in seinem Seitenbereich parallel zueinander umlaufenden Zahnriemen- oder Kettenförderern, an denen Halteleisten für die Randauflage von Tabletts befestigt sind. Diese Ausbildung ist den oben schon erwähnten stationären Einschiebregalen nachempfunden.

Die hohle Auflage der Tabletts im Liftförderer wird in Weiterbildung der Erfindung dazu benutzt, die Tabletts auf ihrer Unterseite zu ergreifen und in einer Schwenkbewegung mit ihrer Oberseite auf den Förderer abzulegen, der sie in die Reinigungseinrichtung überführt. Bei dieser Schwenkbewegung nimmt das Tablett automatisch eine Schrägstellung an, bei der der Tablettinhalt in den darunterliegenden Schütttrichter fällt. Als Entleerungsförderer kommt ein Sauggreifer zum Einsatz, mit dem sich auf einfache Weise ein Wenden der Tabletts realisieren lässt. Um ein Untergreifen der im Liftförderer gelagerten Tabletts zu ermöglichen, ist der Saugarm nicht nur schwenkbar, sondern auch translatorisch zwischen dem Liftförderer und dem Förderer in die Reinigungseinrichtung verfahrbar. Das kann dadurch geschehen, dass die Schwenkachse translatorisch verfahrbar gelagert ist oder aber, dass der Saugarm als Teleskop ausgeführt ist.

In einer besonders vorteilhaften Ausführungsform der Erfindung ist unterhalb des Schütttrichters eine Abfallsortiereinrichtung vorgesehen, mit der die Trennung der Wertstoffe bzw. des Abfalls direkt am Entstehungsort, also im Restaurant erfolgt. Sie weist einen Sortierteller auf, auf den der Tablettinhalt fällt. Dem Sortierteller sind eine Bilderkennung zur Erfassung der Art des auf dem Sortierteller befindlichen Tablettinhalts sowie Blasdüsen zugeordnet, die im Ergebnis der Bildanalyse zum gezielten Entfernen des erkannten Tablettinhalts vom Sortierteller ansteuerbar sind. Der vom Sortierteller geblasene Tablettinhalt landet in Abhängigkeit von der Blasrichtung in entsprechende Behälter. Oberhalb des Sortiertellers ist eine Vereinzelungswalzenanordnung vorgesehen, die aus einem oberen und einem unteren Walzenpaar besteht, deren Ausbildung aus dem Unteranspruch 11 und dem Ausführungsbeispiel hervorgeht. Die Walzen des oberen Walzenpaares drehen sich gegenläufig, so dass die Verpackung in dem Walzenspalt nach unten gezogen wird. Durch die Anordnung der Flügel auf den Walzen wird erreicht, dass der Tablettinhalt nicht gleichzeitig erfasst und weiter transportiert wird, sondern nach Möglichkeit einzeln zwischen die Walzen des unteren Walzenpaares fällt. Diese drehen sich ebenfalls gegenläufig und dienen der Vereinzelung von aufeinanderliegendem Tablettinhalt. Dazu tragen die flexiblen, eine hohe Haftreibung aufweisenden Gummiflügel bei, die aneinanderhaftenden Tablettinhalt voneinander abziehen. Die Gummiflügel sind auf einer Helix angeordnet, so das jeweils nur ein Flügel mit der benachbarten gummierten Glattwalze zusammenwirkt. Dadurch wird der Vereinzelungseffekt verstärkt. Die Walzenspalte sind so gewählt, dass grossvolumiger Tablettinhalt wie Plastik- oder Pappbecher oder Pappschalen leicht zusammengedrückt wird, was zu einer Volumenreduzierung führt. Gleichzeitig vereinfacht dieses Zusammendrücken die Bilderkennung, da die sichtbare Fläche vergrößert wird und z.B. Becher auf dem Sortierteller nicht rollen.

Der Förderer für die Förderung der Tabletts in die Reinigungseinrichtung besteht in einer bevorzugten Ausführungsform der Erfindung aus zwei parallel zueinander angeordneten Zahnriemen- oder Kettenförderern, auf denen die Tabletts in ihrem Randbereich aufliegen. Die Zahnriemen- oder Kettenförderer weisen jeweils Nocken auf, die die Tabletts bei ihrer Förderung an ihrem in Förderrichtung gesehen hinteren Rand hintergreifen. Die Förderung in die Reinigungseinrichtung erfolgt dabei so, dass dieser Förderer die Tabletts mit ihren Rändern in seitliche Führungsschienen der Reinigungseinrichtung einschiebt. Der Transport innerhalb der Reinigungseinrichtung erfolgt durch einen in diesen integrierten mittigen Zahnriemen- oder Kettenförderer, der oberhalb der Schienen und damit der Tabletts angeordnet ist. Dieser Zahnriemen- oder Kettenförderer hat ebenfalls Nocken, die die in Förderrichtung hinteren Tablettränder hintergreifen, so dass die Tabletts gewissermassen durch die Reinigungseinrichtung, geführt in den seitlichen Schienen, geschoben werden. Die Führung der Tabletts in den seitlichen Schienen gestattet den Einsatz mechanischer Reinigungsvorrichtungen, wie z. B. Bürsten, da über die Führungsschienen mechanische Kräfte aufgenommen werden können. Nach dem Verlassen der Reinigungseinrichtung werden die Tabletts auf eine zum Stand der Technik gehörende Stapeleinrichtung abgegeben.

Die Erfindung wird nachstehend anhand von Ausführungsbeispielen näher erläutert. In der dazugehörigen Zeichnung zeigt:
- Fig. 1: eine Gesamtansicht der Vorrichtung zum Leeren und Reinigen von Tabletts in perspektivischer Darstellung,
- Fig. 2: eine schematische Seitenansicht des Schütttrichters mit der darunter angeordneten Sortiereinrichtung, die teilweise in Explosionsdarstellung gezeigt ist,

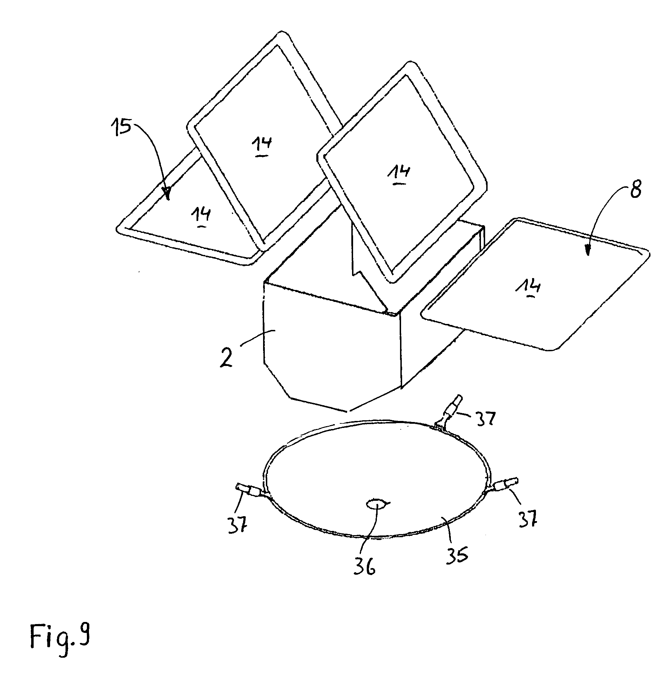

- Fig. 3: eine Draufsicht auf den Sortierteller mit seinen peripheren Einrichtungen,
- Fig. 4: eine Seitenansicht der Förderer zur und in der Reinigungsvorrichtung,
- Fig. 5: ein Blick von rechts auf die Darstellung gemäss Fig. 4,
- Fig. 6: eine Einzelheit A gemäss Fig. 4 in vergrössertem Maßstab,
- Fig. 7: eine Einzelheit B gemäss Fig. 4 in vergrössertem Maßstab,
- Fig. 8: eine Einzelheit C gemäss Fig. 5 in vergrössertem Maßstab, und
- Fig. 9: eine schematische Darstellung der Tablettentleerung.

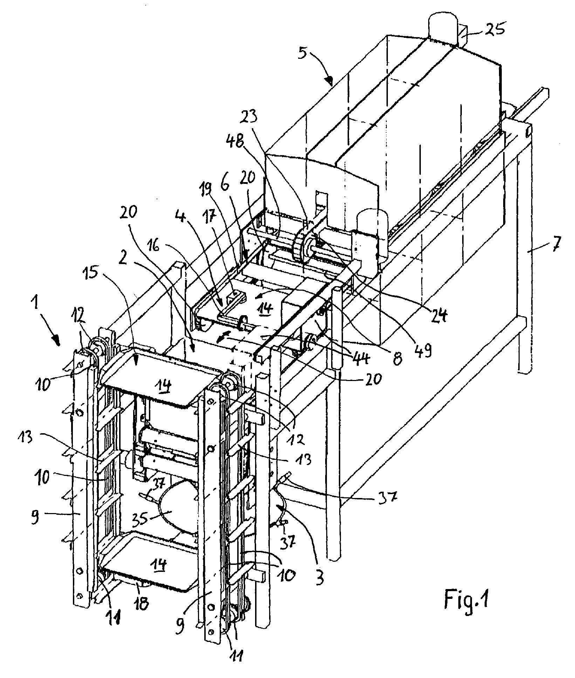

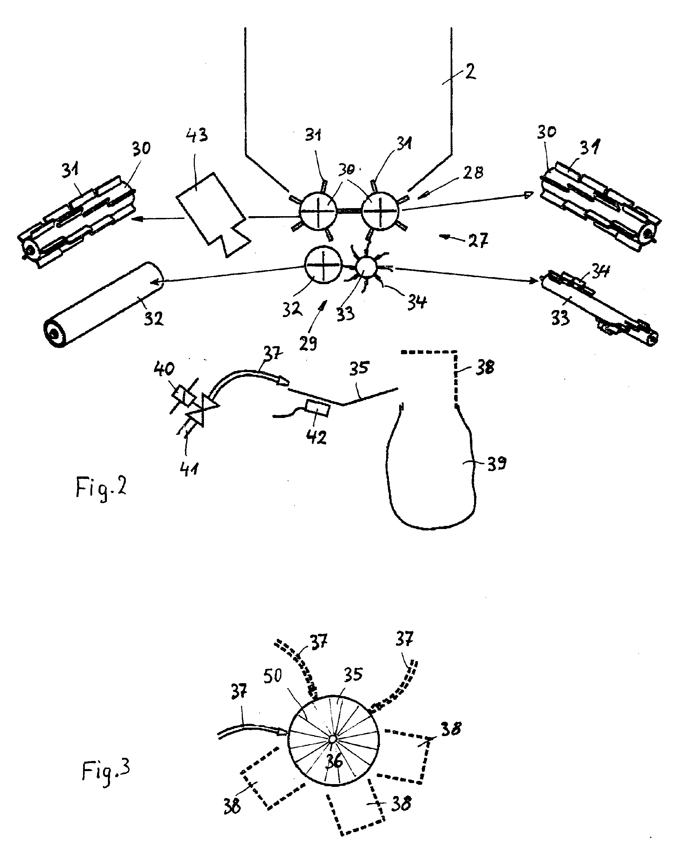

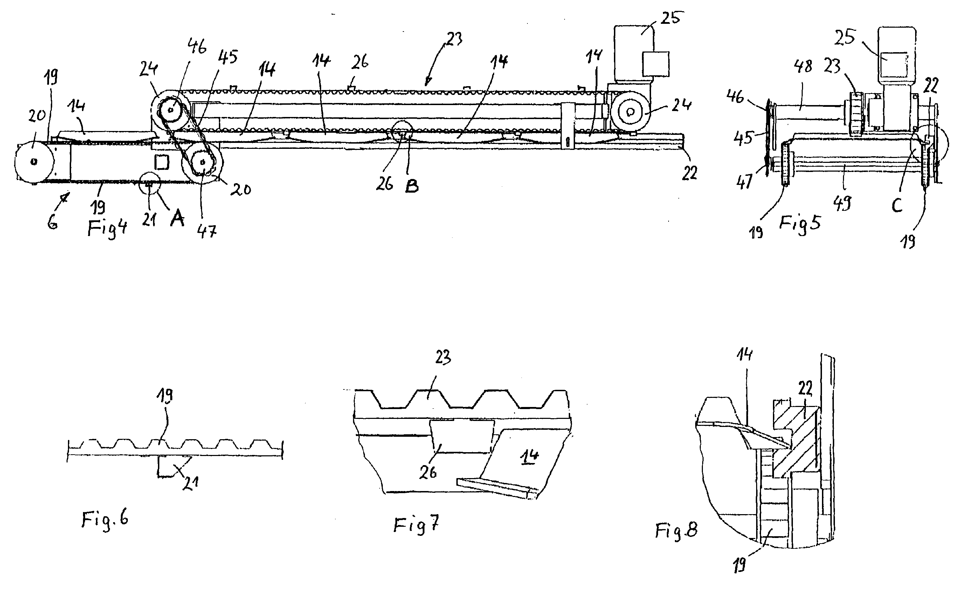

Die in Fig. 1 in ihrer Gesamtheit gezeigte Vorrichtung zum Leeren und Reinigen von Tabletts (14) ist im Wesentlichen aus den Komponenten Liftförderer 1, Schütttrichter 2, Sortiereinrichtung 3, Entleerungsförderer 4, Reinigungseinrichtung 5 und Förderer 6 in die Reinigungseinrichtung 5 zusammengesetzt. Sie ist in einem Gestell 7 aufgeständert, um eine entsprechende Stapelhöhe im Liftförderer 1 sowie Unterbringungsraum für in Fig. 1 nicht dargestellte Sammelbehälter 39 (Fig. 2) zur Verfügung zu stellen.

Der Liftförderer 1 besteht aus zwei starr mit dem Gestell 7 verbundenen Seitengestellen 9, in dem jeweils zwei parallel zueinander angeordnete Ketten- oder Zahnriemenförderer 10 über untere Rollen 11 und obere Rollen 12 umlaufen. Der Antrieb der Riemenförderer 10 erfolgt synchron und schlupffrei über einen elektromotorischen Antrieb 18. An den Ketten- oder Zahnriemenförderern 10 sind parallel im Abstand zueinander Halteleisten 13 befestigt, die der Aufnahme von Tabletts 14 im Liftförderer 1 dienen. Der Liftförderer 1 fördert die Tabletts 14 in eine obere Position 15, deren Lage z. B. durch eine Lichtschranke festgelegt ist. Diese Position 15 ist auf die Manipulationsebene eines als Entleerungsförderer 4 dienenden Sauggreifers 16 abgestimmt. Dieser ist über einen in einem Antriebskasten 44 angeordneten Kurbeltrieb um 180° verschwenkbar, wobei der Antriebskasten 44 über einen aus der Zeichnung nicht ersichtlichen Linearantrieb in Richtung des Doppelpfeils 20 (Fig. 1) verfahrbar ist. Der Sauggreifer 16 besitzt einen Saugkopf 17, der sich durch Anlegung eines Unterdrucks an der Tablettunterseite festsaugt. In der in Fig. 1 gezeigten Situation hat der Sauggreifer 16 gerade ein Tablett 14 auf den Förderer 6 abgelegt, der aus zwei parallel zueinander beabstandeten Zahnriemenförderern 19 besteht, die auf Riemenscheiben 20 umlaufen. Der Antriebskasten 44 (in Volllinien dargestellt) befindet sich in dieser Situation in seiner hintersten Position. Zum Ergreifen eines neuen Tabletts 14 wird der Unterdruck abgestellt, der Sauggreifer 16 um 180° gedreht und anschliessend der Antriebskasten 44 in Richtung auf den Liftförderer 1 translatorisch verfahren (Fig. 1 zeigt den Antriebskasten 44 strichliniert in seiner vordersten Position), so dass sein Saugkopf 17 an der Unterseite des in der Position 15 im Liftförderer 1 befindlichen Tabletts 14 anliegt. Durch Anlegen eines Unterdrucks saugt sich der Saugkopf 17 am Tablett 14 fest. Er wird nun wiederum translatorisch verfahren (Doppelpfeil 20) und gleichzeitig um 180° geschwenkt. Dadurch gelangt das erfasste Tablett 14 in eine Schräglage. Diese Bewegung des Tabletts 14 veranschaulicht Fig. 9, in der von der Vorrichtung lediglich der Schütttrichter 2 und ein darunter angeordneter, zur Sortiereinrichtung 3 gehörender Sortierteller 35 als Bezugspunkte dargestellt sind. Aufgrund der über dem Schütttrichter 2 erreichten Schräglage des Tabletts 14 rutscht der Tablettinhalt, bis auf eine eventuell auf das Tablett 14 zur Verringerung seiner Verschmutzung aufgelegte Papierunterlage, unter Schwerkraftwirkung in den Schütttrichter 2. Bei weiterem Verschwenken, also Vergrößerung der Schräglage des Tabletts 14, rutscht dann auch die Papierunterlage runter, wobei der Ort dieser Schräglage so gewählt ist, dass die Papierunterlage zwischen die beiden Zahnriemenförderer 19 hindurch in einen nicht dargestellten Sammelbehälter fällt. Das entleerte Tablett 14 wird dann mit seiner Oberseite nach unten auf den Förderer 6 abgelegt, wie das aus Fig. 1 hervorgeht. Diese Ablageposition des Tabletts 14 ist in den Fig. 1 und 9 mit dem Bezugszeichen 8 versehen.

Die Zahnriemenförderer 19 weisen Nocken 21 (Fig. 4, 6) auf, die am hinteren Rand des zu fördernden Tabletts 14 anliegen und dieses schlupffrei in die Reinigungseinrichtung 5 fördern. Dort laufen die Tabletts 14 mit ihren auf den Zahnriemenförderern 19 aufliegenden Rändern in beidseitig vorgesehene Schienen 22 (Fig. 4, 5, 8) ein, so dass eine Bewegung der Tabletts 14 nach oben und unten nur in dem durch die Schienen 22 vorgegebenen Maß, also sehr beschränkt, möglich ist.

In der Reinigungsvorrichtung 5 erfolgt der Weitertransport der durch den Förderer 6 eingeschobenen Tabletts 14 durch einen weiteren Zahnriemenförderer 23, der oberhalb der Schienen 22 und damit der zu fördernden Tabletts 14 angeordnet ist. Dieser Zahnriemenförderer 23 läuft auf Riemenscheiben 24 um und wird durch eine Elektromotor-Getriebeeinheit 25 angetrieben. Er ist mittig in der Reinigungsvorrichtung 5 angeordnet und besitzt ebenfalls Nocken 26, die die hinteren Ränder der Tabletts 14 von oben hintergreifen. Dadurch werden die Tabletts 14 durch die Reinigungseinrichtung 5 geschoben.

Der Antrieb der beiden Zahnriemenförderer 19 erfolgt schlupffrei über den Zahnriemenförderer 23. Dazu ist ein Kettentrieb 45 vorgesehen dessen Kettenräder 46 und 47 auf der Achse 48 der vorderen Riemenscheibe 24 des Zahnriemenförders 23 bzw. auf der Achse 49 der hinteren Riemenscheiben 20 der Zahnriemenförderer 19 sitzen. Diese Ausbildung geht aus den Fig. 4 und 5 hervor. Durch die antriebsseitige, schlupffreie Kopplung der beiden Förderer 6 und 23 ist gewährleistet, dass ihre Nocken 21 bzw. 26 synchron umlaufen, d.h., dass am Eingang zur Reinigungseinrichtung 5 der jeweilige Nocken 26 des Zahnriemenförderers 23 schon mittig am hinteren Rand des einlaufenden Tabletts 14 anliegt, bevor die beiden in bezug auf den Nocken 26 aussen liegenden Nocken 21 des Förderers 6 diesen Rand freigeben. Der Transport der Tabletts 14 ist dadurch an der Übergangsstelle zwischen den Förderern 6 und 23 ebenfalls schlupffrei.

In der Reinigungsvorrichtung 5 selbst erfolgt eine Reinigung durch Abstrahlen mit einer Reinigungsflüssigkeit und durch Bürsten sowie eine Desinfektion und eine anschliessende Trocknung der Tabletts 14. Die aus der Reinigungsvorrichtung 5 auslaufenden Tabletts 14 werden einer nicht dargestellten Stapeleinrichtung zugeführt und stehen hier dann für einen weiteren Umlauf in der Gaststätte zur Verfügung.

Der Schütttrichter 2 ist so bemessen, dass er mindestens den Inhalt eines Tabletts 14 aufnehmen kann. Am Ausgang des Schütttrichters 2 ist eine Vereinzelungswalzenanordnung 27 vorgesehen. Diese besteht aus einem oberen Walzenpaar 28 und einem unteren Walzenpaar 29. Die Walzen 30 des oberen Walzenpaares 28 sind mit im wesentlichen starren Flügeln 31 ausgestattet, die auf die Länge der Walzen 30 gesehen jeweils in einer Reihe stufenförmig und mit keinem oder nur einem geringem Längsabstand zueinander versetzt und auf dem Umfang der Walzen 30 in mehreren parallelen Reihen angeordnet sind. Der Abstand der beiden Walzen 30 des oberen Walzenpaares 28 ist so gewählt, dass er etwas grösser ist als das Zweifache der radialen Erstreckung der Flügel 31. Die Walzen 30 werden gegenläufig angetrieben und sind so aufeinander eingestellt, dass sich jeweils die Flügel 31 einer Stufe im Walzenspalt des Walzenpaares 28 mittig gegenüberstehen, wie das aus Fig. 2 hervorgeht. Dadurch wird über die Länge der Walzen 30 betrachtet nacheinander eine Art Schleusentreppe aufgebaut, durch die der in den Schütttrichter 2 eingegebene Tablettinhalt nacheinander in den zwischen den Walzen 32 und 33 des unteren Walzenpaares 29 gebildeten Walzenspalt fällt. Der Walzenspalt des Walzenpaares 29 ist kleiner gewählt als der Walzenspalt des Walzenpaares 28, so dass grossvolumiger Tablettinhalt, wie z. B. Trinkbecher und Schalen in diesem Spalt eine Volumenverringerung erfahren, d.h., etwas platt gedrückt werden. Die Walze 32 ist eine gummierte Glattwalze, während die Walze 33 mit Gummiflügeln 34 bestückt ist. Diese Gummiflügel 34 sind helixförmig auf der Walze 33 angeordnet. Sie überdecken in ihrer radialen Erstreckung im wesentlichen den Walzenspalt zwischen den beiden Walzen 32 und 33 und haben eine hohe Haftreibung. Die Walze 32 rotiert etwa mit der Drehzahl des oberen Walzenpaares 28, während die Walze 33 schneller rotiert. Beide Walzen 32, 33 werden ebenfalls gegenläufig angetrieben. Aufgrund der helixförmigen Anordnung der Flügel 34 auf der Walze 33 arbeitet jeweils immer nur ein Flügel 34 mit der gummierten Glattwalze 32 zusammen.

Das Walzenpaar 29 dient der weiteren Vereinzelung des Tablettinhalts, insbesondere dann, wenn zwei Artikel aufeinanderhaftend den Walzenspalt zwischen dem oberen Walzenpaar 28 passieren. Aufgrund der unterschiedlichen Rotationsgeschwindigkeiten der beiden Walzen 32 und 33 sowie der hohen Haftreibung der Flügel 34 werden aufeinanderhaftenden Tablettinhalte voneinander getrennt. Eine der Walzen 31, 32 oder 33 des oberen und unteren Walzenpaares 28 bzw. 29 ist jeweils schwenkbar aufgehängt, damit nicht deformierbare Gegenstände, die eventuell in die Walzenspalte gelangen, diese passieren bzw. ohne Beschädigung der Walzenpaare 28 und 29 passieren können.

Aufgrund der oben beschriebenen Vereinzelungswalzenanordnung 27 gelangt der Tablettinhalt im wesentlichen in Einzelstücken auf den unterhalb der Vereinzelungswalzenanordnung 27 angeordneten Sortierteller 35. Dieser ist leicht trichterförmig ausgebildet und besitzt an seiner tiefsten Stelle ein Loch 36 zum Abfliessen von Flüssigkeit. Um ein Anhaften von Tablettinhalt zu vermeiden bzw. zu verringern, ist der Sortierteller 35 mit einer Antihaftbeschichtung versehen und seine Oberfläche gewellt, wobei die Wellentäler bzw. -kämme 50 vom Rand zur Mitte verlaufen. Für starke Verschmutzungen kann dem Sortierteller 35 zusätzlich eine nicht dargestellte Spüheinrichtung zugeordnet sein, mit der eine Reinigungsflüssigkeit aufgebracht wird, die durch das Loch 36 in einen Sammelbehälter abfließt.

Am Umfang des Sortiertellers 35 sind in diesem Ausführungsbeispiel drei Blasdüsen 37 vorgesehen, deren Blasrichtung auf das Zentrum des Sortiertellers 35 gerichtet ist. Gegenüber den Blasdüsen 37 ist jeweils ein Fangkorb 38 aus einem luftdurchlässigen, z.B. siebähnlichen Material, angeordnet, unter dem sich ein Auffangbehälter 39 befindet. Die Blasdüsen 37 sind jeweils über ein Elektromagnetventil 40 mit einer Druckluftleitung 41 verbunden. Unterhalb des Sortiertellers 35 befinden sich kapazitive Sensoren 42, die geeignet sind, Essenreste zu detektieren. Oberhalb des Sortiertellers 35 ist eine Videokamera 43 angeordnet. Dazu gehört eine nicht dargestellte lichtstarke Beleuchtungseinheit. Ebenfalls nicht dargestellt ist ein Steuercomputer, der über einen Eingang für das Signal der Videokamera 43, Eingänge für die Sensoren 42, mindestens einen Ausgang zur Steuerung der Walzenpaare 28, 29, mehrere Ausgänge zur Ansteuerung der Magnetventile 40 sowie eine geeignete Hard- und Software zur Verarbeitung von Bildinformationen verfügt.

Der Tablettinhalt ist in Sortiergruppen unterteilt, wobei jeder Sortiergruppe eine bestimmte Blasdüse 37 mit dem jeweils gegenüberliegenden Fangkorb 38 und Auffangbehälter 39 zugeordnet ist. Den festgelegten Sortiergruppen nicht zuordenbare Objekte werden wie eine weitere Sortiergruppe behandelt. Das trifft auch für Essenreste zu.

In Schnellgaststätten fallen inbesondere Leichtverpackungen wie Trinkbecher und Schalen zur Aufnahme von Getränken und Speisen an. Bei der Bilderkennung wird der Umstand genutzt, dass diese Leichtverpackungen charakteristische Oberflächen (Aufdrucke) besitzen und auch eine charakteristische Form haben.

Wenn ein Objekt des Tablettinhalts aus der Vereinzelungswalzenanordnung 27 kommend auf den Sortierteller 35 fällt, erkennt dies der Steuercomputer über die Videokamera 43 und stoppt sofort den Antrieb der Walzenpaare 28, 29. Dadurch wird erreicht, dass jeweils nur ein Objekt auf dem Sortierteller 35 liegt. Dieses wird mit Hilfe der Software identifiziert und einer Sortiergruppe zugeordnet. Es erfolgt dann über den Steuercomputer eine Ansteuerung des Elektromagnetventils 40 der dieser Sortiergruppe zugeordneten Blasdüse 37. Das auf den Sortierteller 35 gefallene Objekt, z. B. eine Pappschale, wird dann durch diese Blasdüse 37 vom Sortierteller 35 in den ihr zugeordneten Fangkorb 38 geblasen, aus dem es unter Schwerkraftwirkung in den darunter angeordneten Auffgangbehälter 39 fällt.

## Patentansprüche

1. Vorrichtung zum Leeren und Reinigen von Tabletts in Schnellgaststätten, insbesondere in Fastfood-Restaurants, mit einem Liftförderer (1), in den die gebrauchten Tabletts (14) übereinander einlegbar und in eine oberste Position (15) verfahrbar sind, einem der obersten Position (15) der Tabletts (14) zugeordneten Entleerungsförderer (4), der dem Liftförderer (1) das jeweils in oberster Position (15) befindliche Tablett (14) entnimmt, in Schräglage über einen Schütttrichter (2) fördert, so dass der Tablettinhalt unter Schwerkraftwirkung in den Schütttrichter (2) fällt, und anschliessend auf einen Förderer (6) ablegt, welcher die Tabletts (14) in eine Reinigungseinrichtung (5) fördert.

2. Vorrichtung nach Anspruch 1, **dadurch gekennzeichnet, dass** der Liftförderer (1) aus jeweils zwei in seinen Seitenbereichen (9) parallel zueinander umlaufenden Zahnriemen-oder Kettenförderern (10) besteht, an denen Halteleisten (13) für die Randauflage von Tabletts (14) befestigt sind.

3. Vorrichtung nach Anspruch 1 oder Anspruch 2, **dadurch gekennzeichnet, dass** der Entleerungsförderer (4) ein Sauggreifer (16) ist, der das in der obersten Position im Liftförderer (1) befindliche Tablett (14) auf seiner Unterseite ergreift und in einer Schwenkbewegung mit der Oberseite nach unten auf den Förderer (6) ablegt.

4. Vorrichtung nach Anspruch 3, **dadurch gekennzeichnet, dass** der Sauggreifer (16) translatorisch zwischen Liftförderer (1) und Förderer (6) verfahrbar oder teleskopierbar ist.

5. Vorrichtung nach einem der vorstehenden Ansprüche, **dadurch gekennzeichnet, dass** unterhalb des Schütttrichters (2) ein feststehender Sortierteller (35) angeordnet ist, auf den der Tablettinhalt fällt, wobei dem Sortierteller (35) eine Bilderkennung (43) zur Erfassung der Art des Tablettinhalts sowie Blasdüsen (37) zugeordnet sind, die im Ergebnis der Bildanalyse zum gezielten Entfernen des Tablettinhalts vom Sortierteller (35) ansteuerbar sind.

6. Vorrichtung nach Anspruch 5, **dadurch gekennzeichnet, dass** der Sortierteller (35) eine Antihaftbeschichtung aufweist.

7. Vorrichtung nach Anspruch 5 oder 6, **dadurch gekennzeichnet, dass** der Sortierteller (35) leicht trichterförmig gestaltet ist und an seiner tiefsten Stelle ein Ablaufloch (36) für Flüssigkeiten aufweist.

8. Vorrichtung nach einem der vorstehenden Ansprüche 5 - 7, **dadurch gekennzeichnet, dass** der Sortierteller (35) eine wellenförmige Oberfläche besitzt, wobei die Wellentäler und - kämme (50) vom Rand zur Mitte verlaufen.

9. Vorrichtung nach einem der vorstehenden Ansprüche 5 - 8, **dadurch gekennzeichnet, dass** neben dem Sortierteller (35) Auffangbehälter (38, 39) angeordnet sind, die einzelnen Blasdüsen (37) zugeordnet sind.

10. Vorrichtung nach einem der vorstehenden Ansprüche, **dadurch gekennzeichnet, dass** am Ausgang des Schütttrichters (2) eine Vereinzelungswalzenanordnung (27) für den Tablettinhalt vorgesehen ist.

11. Vorrichtung nach Anspruch 10, **dadurch gekennzeichnet, dass** die Vereinzelungswalzenanordnung (27) aus zwei übereinander angeordneten Walzenpaaren (28, 29) besteht, wobei die beiden Walzen (30) des oberen Walzenpaares (28) mit im wesentlichen starren Flügeln (31) versehen sind, die auf die Länge der Walzen (30) gesehen jeweils in einer Reihe stufenförmig und mit keinem oder nur einem geringen Längsabstand zueinander versetzt angeordnet sind, wobei auf dem Umfang der Walzen (30) mehrere derartiger Reihen parallel angeordnet sind und die gegenseitige Zuordnung der beiden Walzen (30) so vorgesehen ist, dass beim gegenläufigen Drehen der Walzen (30) sich gegenüberliegende Flügel (31) einer Stufe den Walzenspalt im wesentlichen schliessen, und wobei das untere Walzenpaar (29) aus einer gummierten Glattwalze (32) und einer Walze (33) mit Gummiflügeln (34) besteht, die mit keinem oder nur einem geringen Längsabstand zueinander helixförmig auf der Walze (33) umlaufen und in ihren radialen Abmessungen den Walzenspalt zwischen den beiden Walzen (32, 33) im wesentlichen ausfüllen, wobei die Walze (33) schneller umläuft als die Walze (32).

12. Vorrichtung nach einem der vorstehenden Ansprüche, **dadurch gekennzeichnet, dass** der die Tabletts (14) in die Reinigungseinrichtung (5) transportierende Förderer (6) aus zwei parallel zueinander angeordneten Zahnriemen- oder Kettenförderern (19) besteht, auf denen die Tabletts (14) in ihren Randbereichen aufliegen.

13. Vorrichtung nach Anspruch 12, **dadurch gekennzeichnet, dass** die Zahnriemen- oder Kettenförderer (19) mit Nocken (21) versehen sind, die den in Förderrichtung hinteren Tablettrand hintergreifen.

14. Vorrichtung nach einem der vorstehenden Ansprüche, **dadurch gekennzeichnet, dass** in der Reinigungseinrichtung (5) seitliche Schienen (22) angeordnet sind, in denen die Tablettränder oben und unten geführt laufen, wobei zum Transport der Tabletts (14) durch die Reinigungseinrichtung (5) oberhalb der Tabletts (14) ein mittiger Zahnriemen- oder Kettenförderer (23) vorgesehen ist, der Nocken (26) aufweist, die jeweils den in Förderrichtung hinteren Tablettrand hintergreifen.

15. Vorrichtung nach Anspruch 14, **dadurch gekennzeichnet, dass** die Förderer (6, 23) antriebsseitig schlupffrei mechanisch miteinander gekoppelt sind, damit ein synchroner Umlauf ihrer Nocken (21, 26) gewährleiset ist.
